# EUROPÄISCHE PATENTSCHRIFT

(11) **EP 1 004 784 B1**
(45) Veröffentlichungstag und Bekanntmachung des Hinweises auf die Patenterteilung: **28.01.2004**
(21) Anmeldenummer: 99122113.6
(22) Anmeldetag: 05.11.1999
(51) Int. Cl.: F16C 29/12, B66C 23/70

(54) **Hubsäule**
Lifting post
Elévateur à colonne

(30) Priorität: 23.11.1998 CH 233598
(43) Veröffentlichungstag der Anmeldung: 31.05.2000
(73) Patentinhaber: Magnetic Elektromotoren A.G. Liestal, CH-4410 Liestal (CH)
(72) Erfinder: Schweizer, Frank, 4416 Bubendorf (CH); Salvador, Felice, 4410 Liestal (CH); Argast, Paul, 4460 Gelterkinden (CH); Egli, Beat, 4243 Dittingen (CH); Wüthrich, Christian, 4410 Liestal (CH); Jehle, Thomas, 79618 Rheinfelden (DE)
(74) Vertreter: EGLI-EUROPEAN PATENT ATTORNEYS

(56) Entgegenhaltungen:
- EP-A- 0 415 003
- DE-A- 2 303 644
- DE-C- 352 760
- FR-A- 2 218 274
- GB-A- 2 114 251
- US-A- 5 158 189

## Beschreibung

Die Erfindung betrifft eine Hubsäule, wie sie in den Oberbegriffen von Patentanspruch 1 dargelegt ist.

Derartige Hub- oder Teleskopsäulen werden in vielen Bereichen der Technik zum Heben und Senken von Lasten eingesetzt. Ein Beispiel hierfür ist die Verstelleinrichtung von medizinischen Stühlen oder Betten. Ein weiteres Beispiel ist die bei manchen Schreibtischen vorgesehene motorische Höhenverstellung.

Es sind bereits sogenannte Hubsäulen oder Teleskopsäulen bekannt, bei denen zumindest zwei näherungsweise konzentrisch angeordnete Rohre relativ zueinander bewegbar sind. Hierzu ist ein Antrieb vorhanden, mit dem eines der Rohre gegenüber dem anderen Rohr längsverschiebbar ist. Selbstverständlich können diese Hubsäulen auch beliebig viele teleskopartig ineinander verschachtelte und jeweils gegeneinander bewegliche Rohre aufweisen. Die Bewegbarkeit der Rohre wird durch mehrere Lagereinrichtungen ermöglicht, die sich auf zwei Lagerstellen verteilen, zwischen den beiden Rohren befinden und die zur gegenseitigen Lagerung der Rohre dienen. Die Lagereinrichtungen können dazu ein als Gleitelement ausgebildetes Lagerelement aufweisen, das an einem der beiden Rohre anliegt, wobei durch die Bewegung eine Gleitverschiebung zwischen diesem Rohr und dem Gleitelement stattfindet. Das Gleitelement kann an einem weiteren Lagerelement der Lagereinrichtung befestigt sein, das an dem anderen Rohr ortsfest angeordnet ist. Bei Rohren mit im wesentlichen viereckigem Querschnitt sind bei vorbekannten Hubsäulen die Lagereinrichtungen in der Regel an Seitenflächen der Rohre angeordnet.

In der DE 23 03 644 A wird eine Lagereinrichtung zur Lagerung von zwei Rohren einer Hubsäule offenbart, welche zumindest zwei Lagerelemente aufweist, wobei ein Lagerelement zur ortsfesten Fixierung an einem der Rohre ist und die beiden Lagerelemente Auflageflächen aufweisen, mit denen sie in gegenseitige Anlage bringbar sind, und dass hierbei die Position des einen Lagerelementes gegenüber dem anderen Lagerelement veränderbar ist.

Ein Nachteil dieser vorbekannten Hubsäulen ist deren relativ aufwendige Justage bei der Montage. Es ist nämlich in der Regel erforderlich, dass eine bestimmte Anpresskraft der Gleitelemente gegen das entsprechende Rohr eingestellt wird, um Bewegungen der Rohre quer zur Längsachse auszuschliessen.

Diese Eigenschaften der Hubsäule müssen auch bei relativ grossen Fertigungstoleranzen der Rohre erzielt werden. Man hat deshalb bereits bisher eine Breite der Lagereinrichtung variiert, um Toleranzen in einer Richtung quer zur Längsachse der Rohre auszugleichen. Hierzu sind Unterlagsplättchen vorgesehen, die zwischen dem Rohr und dem ortsfesten Gleitelement angeordnet werden. Es hat sich nun aber gezeigt, dass diese Art der Justage kaum automatisierbar ist, weshalb sie in zeitaufwendiger manueller Tätigkeit durchgeführt wird. Stellt sich nach Einfügen eines Unterlagsplättchens nämlich heraus, dass hiermit nicht die Soll-Anpresskraft erzielt wird, so muss das innere Rohr und die Lagereinrichtung wieder demontiert und ein weiteres Unterlagsplättchen eingefügt werden. Dieser Vorgang wird solange wiederholt, bis die Hubsäule die gewünschten Eigenschaften aufweist.

Ebenso kann nicht zufriedenstellen, dass bei einer Nachjustage der Hubsäule aufgrund eines Verschleisses der Gleitflächen - was beispielsweise nach einer grossen Anzahl an Betriebsstunden auftreten kann - die gesamte Hubsäule demontiert werden muss, um zwischen den Lagerelementen zusätzliche Unterlagsscheiben einzufügen. Alternativ könnten auch die Lagerelemente ausgetauscht werden, wozu jedoch ebenfalls die Hubsäule demontiert werden müsste.

Der Erfindung liegt deshalb die Aufgabe zugrunde, dass eine bestimmte Anpresskraft der Gleitelemente gegen das entsprechende Rohr eingestellt wird, um Bewegungen der Rohre quer zur Längsachse auszuschliessen. Auch soll die Justage bei der Montage vereinfacht werden.

Diese Aufgabe wird bei einer eingangs erwähnten Hubsäule erfindungsgemäss durch die Merkmale des kennzeichnenden Teils von Anspruch 1 gelöst.

Bei erfindungsgemässen Hubsäulen, die sich insbesondere für Möbel oder andere Einrichtungsgegenstände eignen, sollte somit vorgesehen sein, dass die Lagereinrichtung zwei Lagerelemente aufweist, die jeweils mit einer schiefen Ebene versehen sind. Da die beiden Lagerelemente mit den geneigten Flächen aneinander anliegen, kann durch Variation der Position (in Bezug auf die Längsachse der Hubsäule) des Gleitelementes auf dem Lagerelement die Breite (bezüglich einer Ebene quer zur Längsachse der Hubsäule) der Lagereinrichtung beeinflusst werden. Hierdurch ist es ohne die Verwendung von zusätzlichen Elementen, wie Unterlagsplättchen, möglich Toleranzen der Abmessungen der Rohre auszugleichen. Da somit an die Fertigungsgenauigkeit der Rohre geringere Anforderungen gestellt werden müssen, können Hubsäulen aus Rohren mit relativ grossen Toleranzen gebildet und trotzdem vordefinierte Reibverhältnisse erzeugt werden. Hierbei ist bevorzugt wenn der Neigungswinkel α, mit dem die Auflagefläche des Gleitelementes gegenüber der Längsachse geneigt ist, aus einem Bereich zwischen 3° bis 40°, vorzugsweise zwischen 5° und 30°, gewählt ist. Ein Neigungswinkel β der Auflagefläche des anderen Lagerelementes sollte hierzu den gleichen Betrag aufweisen.

Um mit den gleichen Lagerelementen unterschiedliche Breiten der Lagereinrichtung einstellen - und damit auf Toleranzen reagieren - zu können, kann in bevorzugten Ausführungsformen vorgesehen sein, dass die beiden Lagerelemente gegeneinander verstellbar sind. Ein besonders guter Toleranzausgleich kann erzielt werden, wenn die Lagerelemente stufenlos verstellbar sind.

Je nach Querschnittsform der Rohre kann es günstig sein, wenn sich - in bezug auf die Längsachse - Lagereinrichtungen jeweils diametral gegenüberliegen. In diesem Zusammenhang ist - unabhängig von der Querschnittsform der Rohre - unter "diametral" zu verstehen, dass sich Lagereinrichtungen auf einer Geraden befinden, die im wesentlichen orthogonal zu einer Längsachse eines der Rohre verläuft. Dies gilt insbesondere dann, wenn die Rohre symmetrisch aufgebaut sind und die Aussen- bzw. Innenfläche der Rohre aus Teilflächen bestehen, die unstetige Übergänge aufweisen, wie dies beispielsweise bei den vier Teilflächen eines im Querschnitt rechteckigen Rohres der Fall ist. Die Lagereinrichtungen sollten in diesem Fall im Bereich der Übergänge von einer Teilfläche zur anderen Teilfäche, d. h. im Bereich der Kanten des Profils, angeordnet sein. Durch diese Massnahme kann die Torsionsbelastbarkeit der Lagerstellen verbessert werden.

Da erfindungsgemässe Hubsäulen aus unterschiedlich grossen Rohren gebildet werden, die jedoch vorzugsweise gleiche oder zumindest näherungsweise gleiche Profilquerschnittsformen aufweisen, ist es bevorzugt, dass die Grundfläche des Lagerelementes so ausgebildet und geformt ist, dass sie sowohl an dem inneren Rohr als auch an dem äusseren Rohr flächig anliegen könnte. Das gleiche gilt für die Gleitfläche des Gleitelementes. Hierdurch ist es möglich, unter Verwendung der gleichen Lagereinrichtung entweder das innere oder das äussere Rohr längsverschiebbar vorzusehen. Je nach dem sollte das Lagerlement am inneren oder äusseren Rohr befestigt sein und das Gleitelement auf dem jeweils anderen Rohr entlang gleiten. Es kann jedoch auch vorgesehen sein, dass die Gleitelemente an einer Lagerstelle auf dem inneren Rohr und an der anderen Lagerstelle auf der Innenfläche des äusseren Rohres gleiten.

Eine besonders einfache Montage und trotzdem korrekte Justage der erfindungsgemässen Lagereinrichtung an der Hubsäule lässt sich durch eine bevorzugte Ausführungsform erreichen, bei der sich eines der Lagerelemente aus mehreren Einzelteilen, vorzugsweise zwei Teile, zusammensetzt. Sämtliche Einzelteile sind bezüglich einer Mittelebene vorzugsweise symmetrisch aufgebaut. An einem ersten Teil kann die schiefe Ebene angeordnet sein, mit welcher dieses Lagerelement gegen das andere, ebenfalls mit einer schiefen Ebene versehene, Lagerelement anliegt. Die beiden Teile des einen Lagerelementes können, beispielsweise durch einen leichten Pressitz oder eine Schnapppassung, ohne zusätzliche Befestigungsmittel aneinander angeordnet sein. Sie sollten trotz dieser Anordung gegeneinander beweglich sein, um eine Selbstjustage der Lagereinrichtung gegenüber einem der Rohre als Ausgleich von Toleranzen der Rohre zu ermöglichen. Hierbei sollte das sich gegenüber einem der Rohre selbst justierende zweite Teil mit einer zu einer Gleitfläche des Rohres im wesentlichen kongruenten Fläche versehen sein und mit dieser an der Gleitfläche des Rohres anliegen. Mit einer weiteren, vorzugsweise zylindrischen, Fläche kann dieses zweite Teil an einer dazu kongruenten Fläche des ersten Teils des entsprechenden Lagerelementes anliegen und hierdurch eine Art Gelenk ausbilden. Die Selbstjustage kann dann durch eine Drehbewegung um das Gelenk des zweiten Teils um das erste Teil stattfinden.

Weitere bevorzugte Ausgestaltungen der Erfindung ergeben sich aus den abhängigen Ansprüchen.

Die Erfindung wird anhand den in den Figuren schematisch dargestellten Ausführungsbeispielen näher erläutert; es zeigen:
- Fig. 1: eine erfindungsgemässe Hubsäule in einer perspektivischen Darstellung, in der die Lagereinrichtungen nicht dargestellt sind;
- Fig. 2: eine Hubsäule in einer Draufsicht, mit Teilen der erfindungsgemässen Lagereinrichtungen;
- Fig. 3: ein Schnittdarstellung entlang der Linie III-III aus Fig. 2 mit einer vollständigen Lagereinrichtung;
- Fig. 4: ein Darstellung gemäss dem Ausschnitt IV aus Fig. 2;
- Fig. 5: zwei Teile einer erfindungsgemässen Lagereinrichtung in einer Draufsicht;
- Fig. 6a: ein Lagerelement in einer Seitenansicht;
- Fig. 6b: das Lagerelement von Fig. 6a in einer um 90° gedrehten Position in einer Schnittdarstellung;
- Fig. 7a: ein Gleitelement in einer Seitenansicht;
- Fig. 7b: das Gleitelement von Fig. 7a in einer um 90° gedrehten Position in einer Schnittdarstellung;
- Fig. 8a: eine weitere Ausführungsform eines Lagerelementes;
- Fig. 8b: eine weitere Ausführungsform eines Gleitelementes;
- Fig. 9: eine weitere Ausführungsform einer an einer Hubsäule montierten erfindungsgemässen Lagereinrichtung in einer Draufsicht;
- Fig. 10: eine Darstellung gemäss Linie X-X aus Fig. 9;
- Fig. 11: ein erstes Teil eines Gleitelementes der Lagereinrichtung aus den Fig. 9 bis 11 in vier Ansichten;
- Fig. 12: ein zweites Teil eines Gleitelementes der Lagereinrichtung aus den Fig. 9 bis 11 in drei Ansichten;
- Fig. 13: ein Lagerelement der Lagereinrichtung aus den Fig. 9 bis 11 in drei Ansichten;
- Fig. 14 - 16: die Lagereinrichtung aus den Fig. 9 bis 13, die an Hubsäulen mit unterschiedlichen Toleranzen montiert ist.

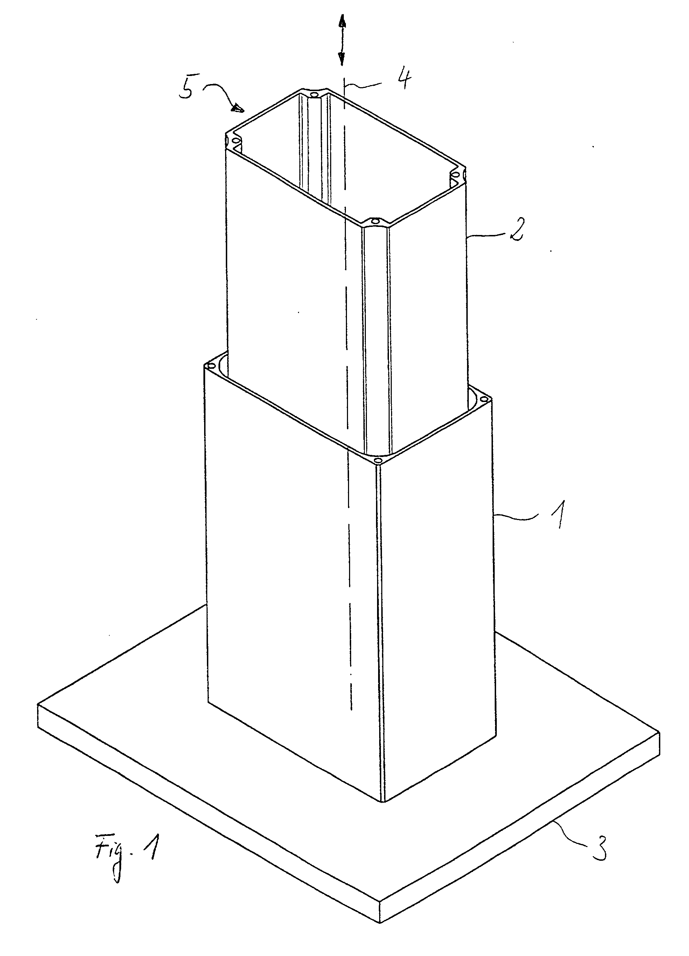

Die in Fig. 1 gezeigte Hub- oder Teleskopsäule weist ein im Querschnitt im wesentlichen rechteckiges äusseres Rohr 1 auf, in dem ein - vorzugsweise die gleiche Querschnittsform aufweisendes - inneres Rohr 2 teleskopartig angeordnet ist. Selbstverständlich können die Rohre auch mit unterschiedlichen Querschnittsformen versehen sein. Das äussere Rohr 1 ist an einem Fuss 3 befestigt und somit ortsfest. Das innere Rohr 2 ist im wesentlichen konzentrisch zum äusseren Rohr 1 angeordnet und kann durch einen im äusseren Rohr 1 angeordneten, nicht dargestellten Antrieb entlang der gemeinsamen Längsachse 4 translatorisch bewegt werden. Hierzu kann beispielsweise ein Motor des Antriebs eine Gewindespindel antreiben, auf der sich wiederum eine mit dem inneren Rohr 2 verbundene Gewindemutter befindet. Es bedarf keiner Erwähnung, dass auch nahezu jede beliebige andere Antriebsart, wie beispielsweise Zahnstangen, Seilumlenkungen, pneumatische oder hydraulische Antriebe, zum Einsatz kommen kann. Am freien, d.h. oberen Ende 5 des inneren Rohres 2 kann eine Last angebracht werden, die durch die Hubsäule in vertikaler Richtung verstellbar ist.

Die Erfindung ist jedoch selbstverständlich nicht auf Hubsäulen mit lediglich zwei Rohren und auf Bewegungen in vertikaler Richtung beschränkt. Ebenso kann es vorgesehen sein, dass das Rohr mit dem kleinsten Aussendurchmesser ortsfest ist, und das bzw. die Rohre mit den grösseren Durchmessern angetrieben werden.

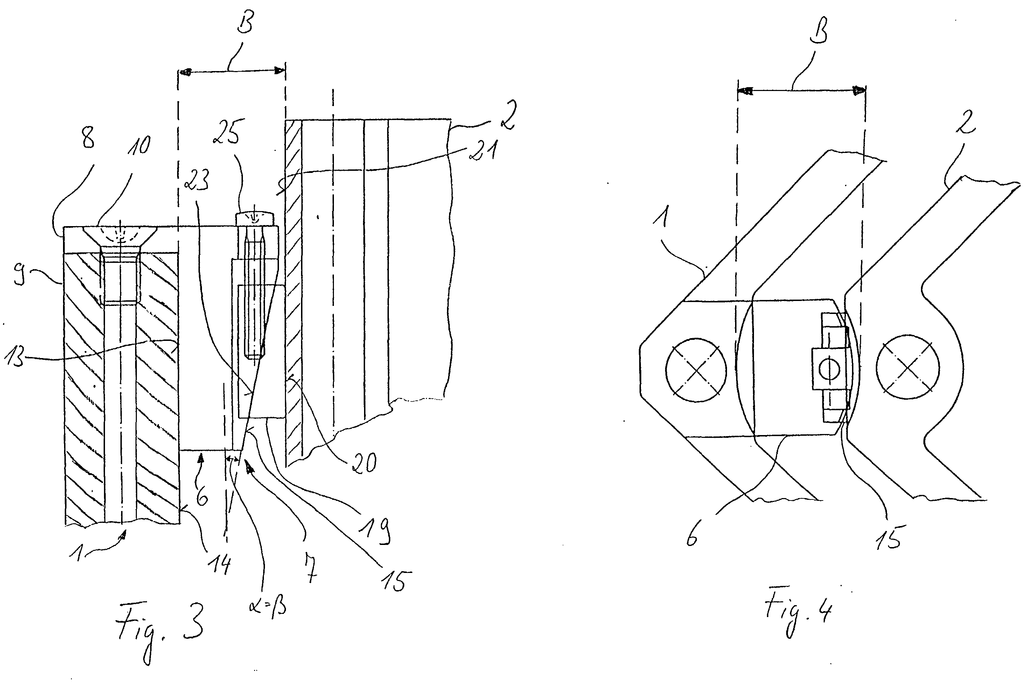

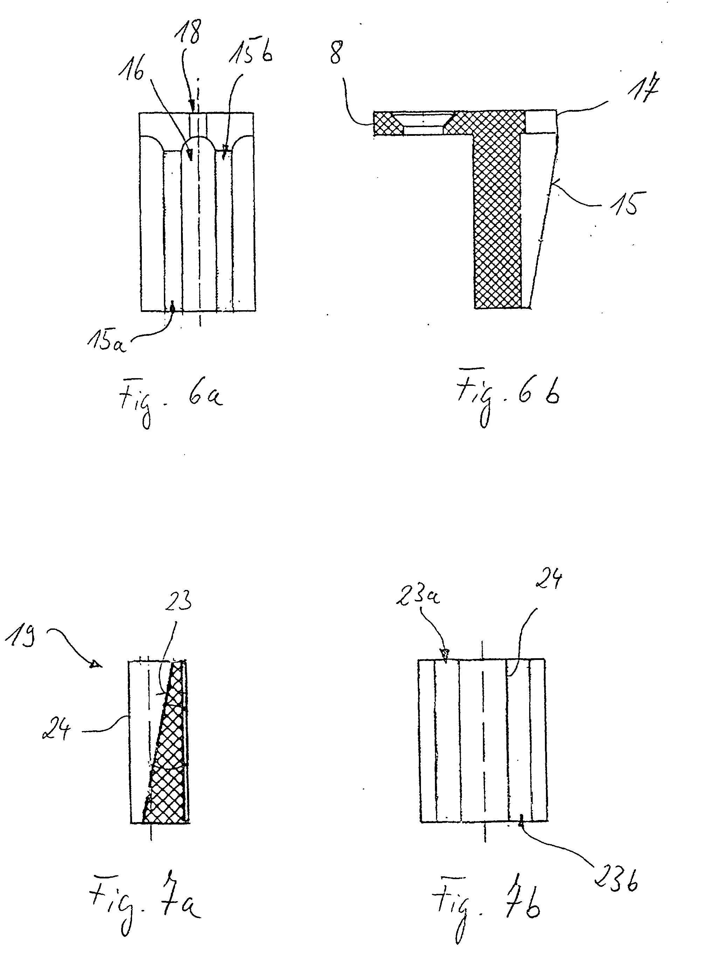

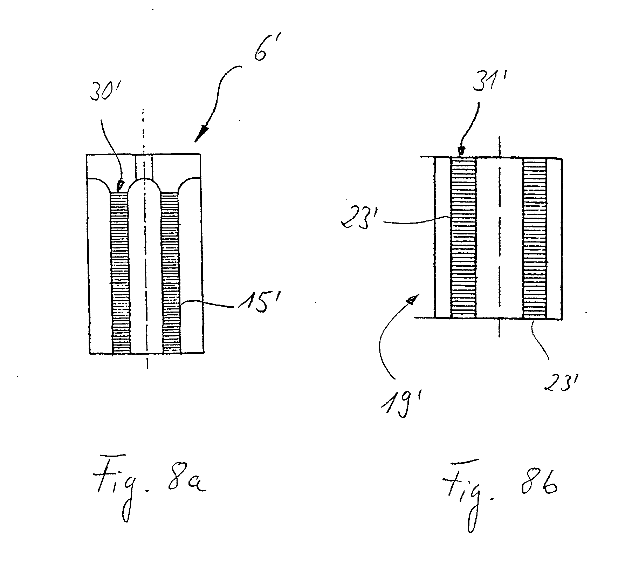

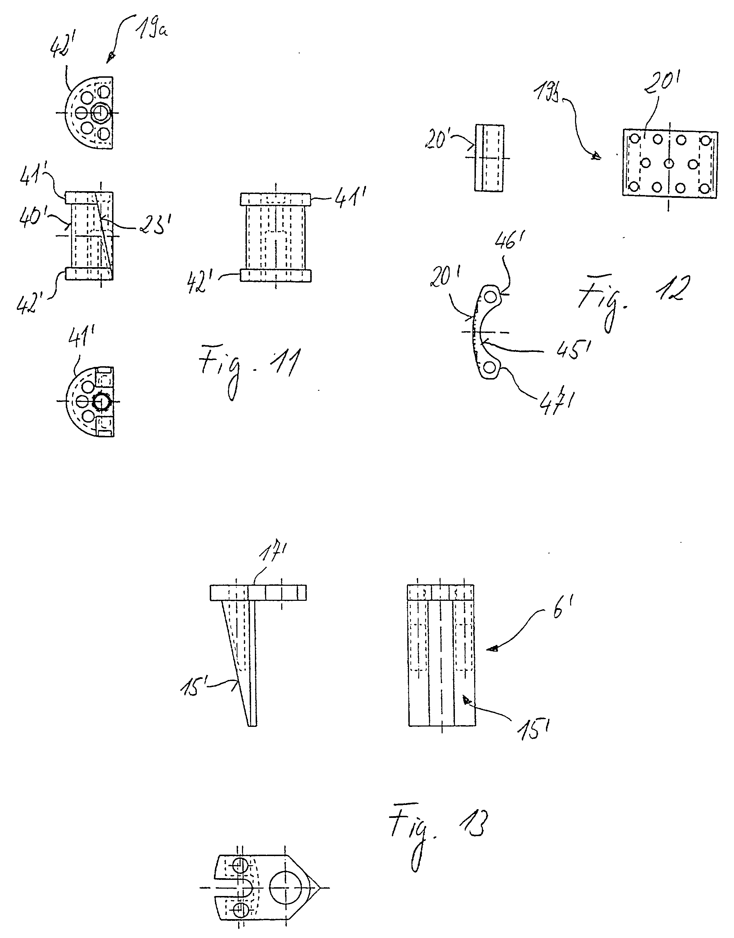

In Fig. 3 ist nun zu erkennen, dass an dem dem Fuss 3 gegenüberliegenden Ende des äusseren Rohres 2 ein Lagerelement 6 einer Lagereinrichtung 7 befestigt ist. Dieses in den Fig. 6a und 6b näher gezeigte Lagerelement 6 weist eine Schulter 8 auf, die auf der Stirnfläche der Wand 9 des Rohres 1 aufliegt. Die Schulter 8 des Lagerelementes ist mit einer Schraube 10 in der Wand 9 des Rohres 1 befestigt und somit gegenüber dem äusseren Rohr 1 fixiert. Das Lagerelement 6 weist eine im wesentlichen ebene und parallel zur Längsachse 4 verlaufende Grundfläche 13 auf, mit der es an einer Innenfläche 14 des Rohres 1 anliegt. An einer der Grundfläche 13 gegenüberliegenden und zur Längsachse weisenden Seite des Lagerelementes 6 ist dieses mit einer Auflagefläche 15 versehen, die gegenüber der Grundfläche 13 einen Neigungswinkel α von in etwa 6° aufweist. Wie insbesondere Fig. 6a entnommen werden kann, ist das Lagerelement 6 an dieser Seite mit einer parallel zur Längsachse verlaufenden Nut 16 versehen, welche die Auflagefläche in zwei im wesentlichen identische Teilflächen 15a und 15b unterteilt.

Das Lagerelement 6 hat in einem sich an die Schulter 8 in Richtung zum inneren Rohr 2 anschliessenden Steg 17 einen durchgehenden Schlitz 18.

In dem Lagerelement 6 ist ein als Gleitelement 19 ausgebildetes zweites Lagerelement angeordnet. Auch dieses weist eine im montierten Zustand parallel zur Längsachse 4 ausgerichtete Grundfläche 20 auf. Eine der Grundfläche 20 gegenüberliegende Seite des Gleitelementes 19 ist ebenfalls mit einer Auflagefläche 23 versehen, die gegenüber der Längsachse 4 einen Neigungswinkel β aufweist, dessen Betrag mit jenem des Neigungswinkels α gleich ist. Auch hier ist die Auflagefläche 23 in zwei Teilflächen 23a, 23b unterteilt, wobei zwischen den Teilflächen 23a, 23b ein Führungssteg 24 angeordnet ist, dessen Breite nur geringfügig kleiner ist als die Breite der Nut. Durch einen Eingriff des Führungssteges 24 wird somit eine Führung des Gleitelementes 19 im Lagerelement 6 ermöglicht.

Fig. 3 kann ferner entnommen werden, dass das Gleitelement 19 mit einer selbstschneidenden Schraube 25 am Lagerelement 6 befestigt ist. Hierzu liegt der Kopf der Schraube auf einer Oberseite des Steges 17 auf, während der Gewindeteil der Schraube durch den Schlitz 18 hindurchgesteckt und in das Gleitelement 19 hineingedreht ist. Da das Gleitelement 19 mit seiner Auflagefläche 23 auf der Auflagefläche 15 des Lagerelementes 6 aufliegt, ergibt sich durch die Einschraubtiefe eine bestimmte Position des Gleitelementes 19 auf dem Lagerelement 6. Durch diese Position ist wiederum eine bestimmte Breite B der Lagereinrichtung 7 vorgegeben. Als Breite B kann beispielsweise der Abstand der Grundfläche 13 des Lagerelementes 6 zur Grundfläche 20 des Gleitelementes 19 angenommen werden. Wird die Schraube weiter angezogen, so bewegt sich dadurch das Gleitelement 19 mit seiner Auflagefläche 23 auf der Auflagefläche 15 des Lagerelementes 6 in einer Richtung parallel zur Längsachse 4 auf den Schraubenkopf zu. Hierdurch wird die Breite B der Lagereinrichtung 7 vergrössert. Selbstverständlich kann durch eine Verringerung der Einschraubtiefe auch die Breite B verkleinert werden.

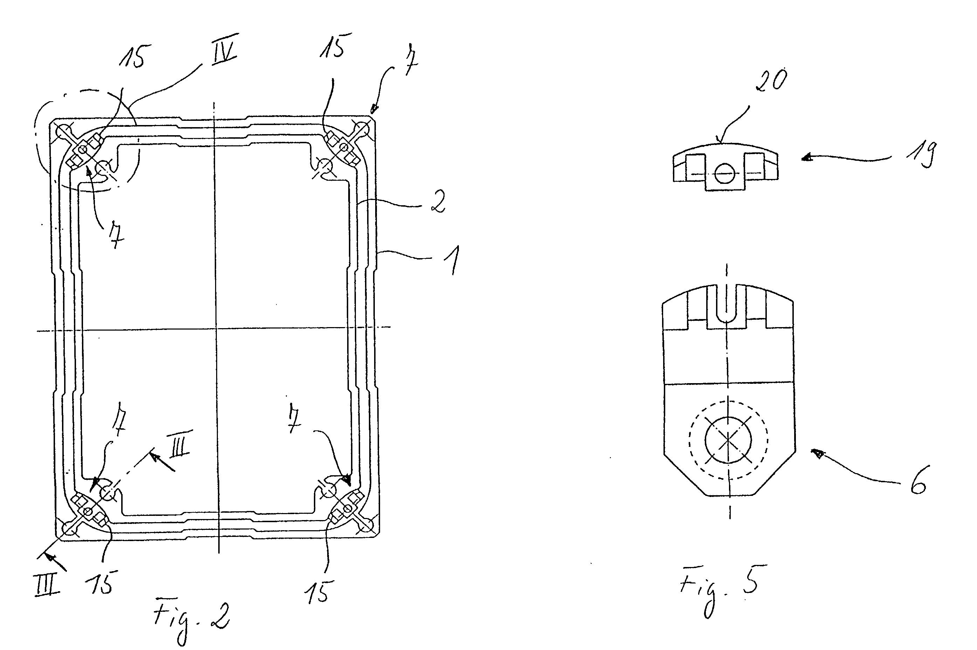

Die beiden Rohre 1, 2 des gezeigten Ausführungsbeispiels stützen sich an zwei Lagerstellen mit insgesamt acht Lagereinrichtungen gegenseitig ab. Hierbei sind an einer Lagerstelle jeweils vier Lagereinrichtungen im wesentlichen in einer Ebene angeordnet, die orthogonal zur Längsachse 4 verläuft. In Fig. 2 ist eine der beiden aus jeweils vier Lagereinrichtungen 7 bestehenden Lagerstellen zu erkennen. Aus Übersichtlichkeitsgründen ist in Fig. 2 von jeder Lagereinrichtung 7 lediglich deren Gleitelement 15 gezeigt. Die andere Lagerstelle befindet sich am unteren Ende des inneren Rohres 2.

Bei der Montage der Hubsäule werden zunächst sämtliche Lagereinrichtungen jeweils mit ihrem Lagerelement 6 befestigt. Dies bedeutet, dass bei der in Fig. 2 gezeigten Lagerstelle die Lagerelemente 6 am äusseren Rohr 1 und bei der in den Figuren nicht gezeigten zweiten Lagerstelle die Lagerelemente 6 an der unteren Stirnseite des inneren Rohres 2 angeordnet werden. Damit das innere Rohr 2 leicht in das äussere Rohr einführbar ist, sollte die Einschraubtiefe der Schraube 25 in das jeweilige Gleitelement 19 möglichst gering sein, damit die Breite B der Lagereinrichtung gering ist. Nachdem sich das innere Rohr 2 im äusseren Rohr 1 befindet, kann die Schraube 25 angezogen werden, wodurch sich das Gleitelement 19 auf der geneigten Auflagefläche 15 des Lagerelementes 6 in Richtung zum Schraubenkopf und in Richtung zur Längsachse 4 bewegt. Hierdurch kommt das Gleitelement 19 mit seiner Grundfläche 20 mit der jeweiligen Gleitfläche 21 des inneren Rohres 2 in Kontakt. Da die Kraft, mit der das Gleitelement 19 am inneren Rohr 2 anliegt (Anpresskraft), ein Faktor für die vom Antrieb zur Verfügung zu stellende Hubkraft ist, kann die Anpresskraft und damit ein Soll-Anzugsmoment für die Schraube 25 vorgegeben werden. Diese eindeutige Beziehung zwischen Soll-Anzugsmoment der Schraube 25 und der Anpresskraft kann zu einem höheren Automatisierungsgrad der Montage der Hubsäule genutzt werden. So ist es beispielsweise möglich, mit einem Luftdruckschrauber die Schraube einzudrehen, wobei der Luftdruckschrauber bei Erreichen des Soll-Anzugmomentes abgeschaltet wird. Eine zeitaufwendige manuelle Justage kann somit vermieden werden.

Die Montage kann dadurch weiter vereinfacht werden, dass von den vier Lagereinrichtungen 7 an jeder Lagerstelle zwei mit bereits fest vorgegebenen Positionen zwischen dem jeweiligen Lagerelement 6 und Gleitelement 19 montiert werden. Die beiden anderen Lagereinrichtungen 7 werden hingegen erst justiert, wenn das innere Rohr 2 in das äussere Rohr eingefügt worden ist. Somit ist zur Erzielung einer bestimmten Anpresskraft und damit einer bestimmten Reibung zwischen den Gleitelementen 19 und dem inneren Rohr 2 die Justage von lediglich zwei Lagereinrichtungen 7 erforderlich. Es ist bevorzugt, wenn die Lagereinrichtungen 7 der zweiten Lagerstelle in der gleichen Weise montiert werden. Hierbei kann vorgesehen sein, dass die beiden zu justierenden Lagereinrichtungen 7 an den gleichen Kanten des inneren bzw. äusseren Rohres 1, 2 angeordnet werden, wie die zu justierenden Lagereinrichtungen 7 der anderen Lagerstelle. Für das gezeigte Ausführungsbeispiel bedeutet dies, dass Gleitelemente 19 von zu justierenden Lagereinrichtungen auf Gleitflächen des äusseren Rohres 2 anliegen, die den jeweiligen Gleitflächen der einzustellenden Lagereinrichtungen der anderen Lagerstelle direkt gegenüber liegen. Hierdurch kann ein Verkippen des inneren Rohres gegenüber dem äusseren Rohr aufgrund der Justage der Lagereinrichtungen im wesentlichen vermieden werden.

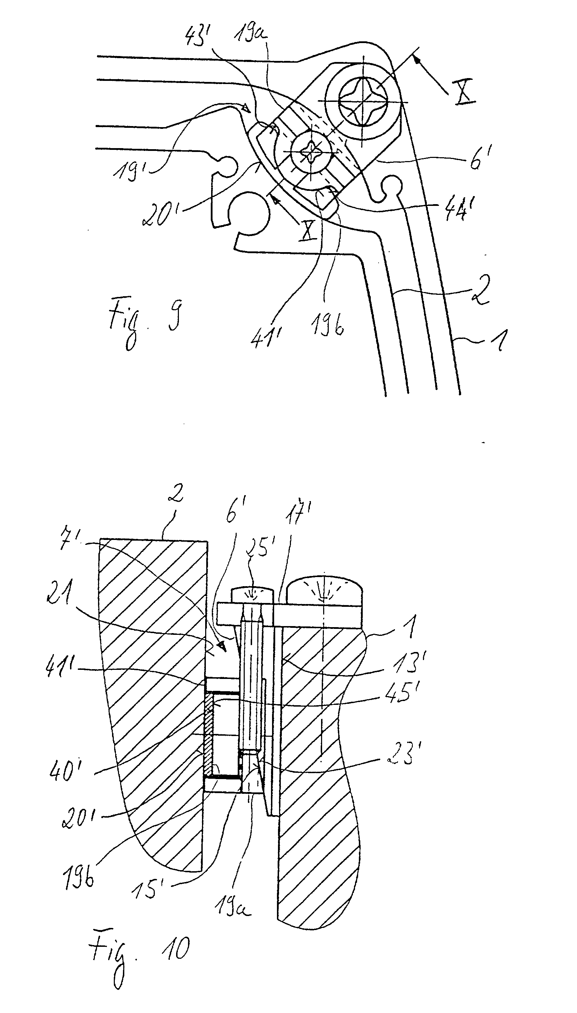

In den Fig. 8a und 8b ist ein weiteres Ausführungsbeispiel einer erfindungsgemässen Lagereinrichtung 7' gezeigt. Im Unterschied zu der in den Fig. 3 bis 7b gezeigten Ausführungsform, ist hier an den geneigten Auflageflächen 15', 23' des Lagerelementes 6' und des Gleitelementes 19' jeweils eine Verzahnung 30', 31' eines Stufenprofils vorhanden. Bis auf diese Verzahnung stimmt die Lagereinrichtung 7' jedoch überein mit der in den Fig. 3 bis 7b gezeigten Lagereinrichtung 7.

Die beiden Profile der Verzahnungen 30', 31' der beiden Auflageflächen 15', 23' sind im wesentlichen identisch, wodurch ein formschlüssiger Eingriff der einen Verzahnung 30' in die andere Verzahnung 31' möglich ist. Wie Fig. 8a und 8b entnommen werden kann, sind die einzelnen Zähne zumindest in etwa orthogonal zu einer Achse ausgerichtet, die parallel zur Längsachse 4 verläuft. Daraus ergibt sich, dass das Lagerelement 6' und das Gleitelement 19' ab einer bestimmten Anpresskraft zwischen dem längsverschiebbaren Rohr und dem Gleitelement 19' ineinander verhaken und eine weitere Bewegung des Gleitelementes 19' gegenüber dem Lagerelement 6' hin zu einer grösseren Breite B der Lagereinrichtung nicht stattfindet. Diese Anpresskraft entspricht einem bestimmten Anzugsmoment der Schraube 25, mit der das Gleitelement 19' am Lagerelement 6' zu befestigen ist.

Selbstverständlich ist es auch möglich, die Fixierung der beiden Elemente ab einer bestimmten Anpresskraft auf andere Weise als durch eine Verzahnung zu bewirken. So kann beispielsweise eine Oberflächenrauheit der Auflageflächen so gross gewählt werden, dass die Auflageflächen ineinander verhaken. Ebenso könnte durch eine Materialpaarung zwischen Lagerelement und Gleitelement eine Reibkraft erzeugt werden, welche zu einer Fixierung führt. Schliesslich ist auch denkbar, dass der Neigungswinkel der Auflageflächen so gewählt wird, dass ab einer bestimmten Anpresskraft eine Selbsthemmung eintritt.

In weiteren bevorzugten Ausführungsformen erfindungsgemässer Lagereinrichtungen kann auch vorgesehen sein, dass ein Gleitelement 19' mehrteilig - vorzugsweise in Form von zwei baulich voneinander getrennten Teilen 19a, 19b - ausgebildet ist, während das andere Lagerelement 6' gegenüber der in den Fig. 2 bis 8b gezeigten Ausführungsform im wesentlichen unverändert ist. Da der Unterschied von dieser Ausführungsform gegenüber der zuvor erörterten Ausführungsform im wesentlichen in der Zweiteilung des Gleitelementes 19' besteht, wird im folgenden nur hierauf und den sich daraus ergebenden Eigenschaften eingegangen.

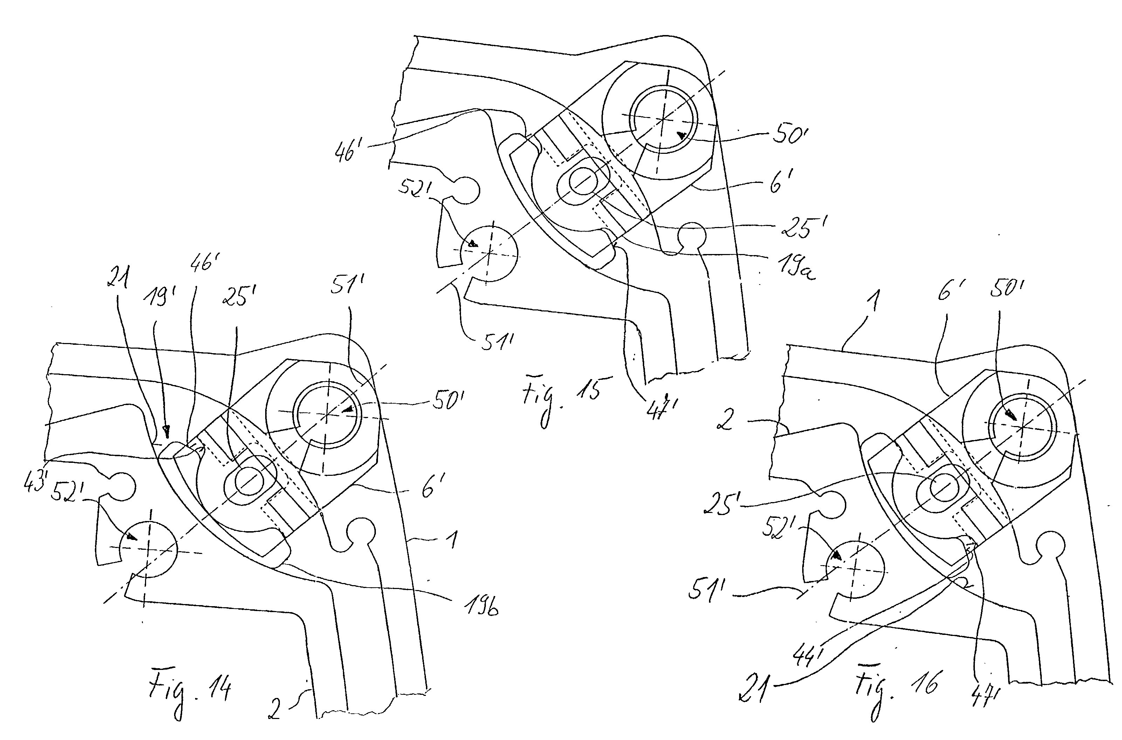

Eine solche zweiteilige Ausführungsform ist in den Fig. 9 bis 16 gezeigt. Insbesondere in Fig. 9 und 10 ist zu erkennen, dass ein derartiges Gleitelement 19' einer Lagereinrichtung 7' einen ersten Teil 19a aufweist, an dem die Auflagefläche 23' ausgebildet ist, welche zur Anlage an der Auflagefläche 15' des Lagerelementes 6' bestimmt ist. Dieses Gleitelement 19' weist in seinem ersten Teil 19a wiederum ein Innengewinde auf, in das eine mit ihrem Kopf auf dem Steg 17' des Lagerelementes 6' aufliegende Schraube 25' eingedreht ist. Auch bei dieser Ausführungsform bestimmt sich aufgrund der Einschraubtiefe die Position des Gleitelementes 19' gegenüber dem Lagerelement 6', die mit ihren schrägen, jeweils mit dem Neigungswinkel α, β versehenen, Auflagenflächen 15', 23' aneinander anliegen.

Der erste Teil 19a ist an einer seiner Auflagefläche 23' gegenüberliegenden Seite mit einer bombierten, d.h. konvex gekrümmten, zylindrischen Anlagefläche 40' ausgebildet. Deren Krümmungsrichtung verläuft hierbei quer zur vorgesehenen Längsverschiebung (entspricht einer Richtung entlang Längsachse 4 aus Fig. 1) der Hubsäule. Die Anlagefläche 40' ist - hinsichtlich der vorgesehenen Verschieberichtung - zwischen zwei Schultern 41', 42' angeordnet, die eine im wesentlichen der Anlagefläche 40' entsprechende Krümmung aufweisen. Bezüglich einer Richtung quer zur vorgesehenen Bewegungsrichtung der Hubsäule geht die Anlagefläche 40' auf beiden Seiten in zwei im wesentlichen miteinander fluchtende und parallel zueinander ausgerichtete ebene Begrenzungsflächen 43', 44' über.

Die Grundfläche 20', d.h. die Fläche, mit welcher das Gleitelement 19' am inneren Rohr 2 anliegt, ist an einem als Einstellelement vorgesehenen zweiten Teil 19b des Gleitelementes 19' ausgebildet. Im Ausführungsbeispiel der Fig. 9 und 10 ist die Grundfläche 20' konvex gekrümmt, um über ihre gesamte Länge an einer entsprechend gekrümmten Gleitfläche 21 des inneren Rohres 2 flächig anzuliegen. Auf einer der Grundfläche 20' gegenüberliegenden Seite des zweiten Teils 19b weist dieses eine konkav gekrümmte Positionierungsfläche 45' auf. Letztgenannte ist stärker gekrümmt als die Grundfläche 20' und geht - hinsichtlich einer Richtung quer zur vorgesehenen Längsverschieberichtung der Hubsäule in Anschlagflächen 46', 47' über (vgl. auch Fig. 12). Im montierten Zustand liegen die Anschlagflächen 46', 47' jeweils einer Begrenzungsfläche 43', 44' des ersten Teils 19a gegenüber.

Wie insbesondere in Fig. 10 zu erkennen ist, ist der zweite Teil 19b des Gleitelementes 19' zwischen den beiden Schultern 41', 42' des ersten Teils 19a eingesetzt. Die beiden Teile sind hierbei so aufeinander abgestimmt, dass eine leichte Presspassung entsteht. Alleine hierdurch kann der zweite Teil 19b am ersten Teil 19a gehalten werden. Die Presspassung lässt jedoch eine Relativverschiebung des zweiten Teils 19b gegenüber dem ersten Teil 19a auf der Anlagefläche 40' zu.

Die zuvor erörterte Ausgestaltung des Lagerelementes ermöglicht besonders grosse Toleranzen der Rohre 1, 2 der Hubsäule, ohne dass dies die Funktionsfähigkeit der Hubsäule beeinträchtigen würde. Dies kann sogar ohne eine Nachjustage des bzw. der Lagereinrichtungen erreicht werden. Aufgrund der beschriebenen konstruktiven Ausgestaltung findet nämlich eine Selbstausrichtung des zweiten Teils 19b des Gleitelementes 19' gegenüber dem inneren Rohr 2 und dem ersten Teil 19a statt.

Um dies zu verdeutlichen, sind in den Fig. 14, 15 und 16 drei prinzipiell gleich aufgebaute Hubsäulen gezeigt. Die Hubsäulen unterscheiden sich lediglich durch Toleranzen der jeweils verwendeten Rohre 1, 2. Durch diese unterschiedlichen Toleranzen wird eine Bohrung 50' - welche zur Befestigung des Lagerelementes 6' dient - in der Wand des äusseren Rohres 1 gegenüber der Gleitfläche 21 des inneren Rohres 2 an jeweils unterschiedlichen Stellen positioniert. In den Fig. 14 bis 16 kann dies anhand einer durch das Zentrum der Bohrung 50' und eine Längsachse der Schraube 25' - mit welcher der Teil 19a am Lagerelement 6' befestigt ist - verlaufenden Geraden 51' leicht nachvollzogen werden. Die Gerade 51' ist nämlich gegenüber einer Bohrung 52' in der Wand des inneren Rohres 2 unterschiedlich ausgerichtet. Wie den Figuren 14 bis 16 entnommen werden kann, liegt hierdurch auch der zweite Teil 19b des Gleitelementes 19' an der Gleitfläche 21 des inneren Rohres 2 an jeweils unterschiedlichen Stellen an. Dies bedingt eine relative Verdrehung des zweiten Teils 19b gegenüber dem ersten Teil 19a um eine zur Zeichenebene dieser Figuren (nicht dargestellte) orthogonale Achse auf der Anlagefläche 40'. Die beiden Figuren 14 und 16 geben hierbei die beiden möglichen maximalen Verdrehpositionen wieder, da hier bereits jeweils eine Anschlagfläche 46', 47' an einer der Begrenzungsflächen 43', 44' zu liegen kommt.

## Patentansprüche

1. Hubsäule mit mindestens zwei ineinander angeordneten Rohren unterschiedlichen Aussendurchmessers, welche einen Antrieb aufweist, der mit einem der Rohre wirkverbunden ist, wodurch eines der Rohre gegenüber einem anderen Rohr entlang einer Längsachse relativ verfahrbar ist, wobei die beiden Rohre durch zumindest eine zwischen den Rohren angeordnete Lagereinrichtung gegeneinander gelagert sind, die zumindest eine Lagereinrichtung in Bezug auf die Verfahrrichtung der Rohre an einem der Rohre ortsfest angeordnet und das andere Rohr gegenüber der Lagereinrichtung durch Gleitverschieben relativ beweglich ist, **dadurch gekennzeichnet, dass** die Lagereinrichtung (7, 7') zwei mit Auflageflächen (15, 23; 15', 23') aufeinanderliegende Lagerelemente (6, 19; 6', 19') aufweist, und eine gemeinsame Breite der Lagerelemente (6, 19; 6', 19') - bezüglich einer Richtung quer zur Längsachse (4) - veränderbar ist, wobei beide Lagerelemente (6, 19; 6', 19') mit einer gegenüber der Längsachse (4) geneigten Auflagefläche (15, 23; 15', 23') versehen sind.

2. Hubsäule nach Anspruch 1, **dadurch gekennzeichnet, dass** die beiden Flächen in Bezug auf Grundflächen (13, 20; 13', 20') der beiden Lagerelemente (6, 19; 6', 19') mit im wesentlichen gleichen Neigungswinkeln (α, β) versehen sind.

3. Hubsäule nach Anspruch 1 oder 2, **dadurch gekennzeichnet, dass** die beiden Lagerelemente (6, 19; 6', 19') in Richtung der Längsachse (4) gegeneinander verstellbar sind.

4. Hubsäule nach einem oder mehreren der vorhergehenden Ansprüche, **dadurch gekennzeichnet, dass** eine gemeinsame Breite (B) - bezüglich einer Richtung im wesentlichen quer zur Längsachse (4) der Hubsäule - der Lagerelemente (6, 19; 6', 19') durch unterschiedliche Positionen - bezüglich einer Richtung im wesentlichen parallel zur Längsachse (4) - der Lagerelemente (6, 19; 6', 19') zueinander, veränderbar ist.

5. Hubsäule nach Anspruch 3 oder 4, **dadurch gekennzeichnet, dass** die beiden Lagerelemente (6, 19; 6', 19') stufenlos verstellbar sind.

6. Hubsäule nach einem oder mehreren der vorhergehenden Ansprüche, **dadurch gekennzeichnet, dass** die beiden Flächen (15, 23; 15', 23') jeweils mit einem Stufenprofil versehen sind.

7. Hubsäule nach einem oder mehreren der vorhergehenden Ansprüche, **dadurch gekennzeichnet, dass** die beiden Rohre (1, 2) im Querschnitt jeweils ein im wesentlichen eckiges Querschnittsprofil aufweisen und Lagereinrichtungen (7, 7') jeweils im Bereich von Kanten der Rohre angeordnet sind.

8. Hubsäule nach einem oder mehreren der vorhergehenden Ansprüche, **dadurch gekennzeichnet, dass** das Lagerelement (6, 19; 6', 19'), das mit dem beweglichen Rohr (1, 2) in Kontakt ist, eine gewölbte Reibfläche aufweist, und dass dieses Rohr mit einer dazu kongruenten Gleitfläche (21) versehen ist.

9. Hubsäule nach einem oder mehreren der vorhergehenden Ansprüche, **dadurch gekennzeichnet, dass** eines der beiden Lagerelemente (6, 19; 6', 19') mehrteilig, vorzugsweise zweiteilig, ausgebildet ist, wobei ein Teil (19a) des mehrteiligen Lagerelementes (6, 19; 6', 19') an dem anderen Lagerelement (6, 19; 6', 19') und der zweite Teil (19b) des mehrteiligen Lagerelementes (6, 19; 6', 19') flächig an einem der Rohre (1, 2) anliegt.

10. Hubsäule nach Anspruch 9, **dadurch gekennzeichnet, dass** die beiden Teile (19a, 19b) mit zwei zumindest abschnittsweise im wesentlichen kongruenten Flächen (40', 45') gegeneinander anliegen.

11. Hubsäule nach einem oder beiden der vorhergehenden Ansprüche 9 oder 10, **dadurch gekennzeichnet, dass** zwei Teile (19a, 19b) des mehrteiligen Lagerelementes (6, 19; 6', 19') in einer Richtung, die im wesentlichen quer zur Verfahrrichtung eines der Rohre verläuft, relativ zueinander verstellbar sind.

12. Hubsäule nach Anspruch 10, **dadurch gekennzeichnet, dass** die beiden Teile (19a, 19b) in Abhängigkeit von Massen der Rohre (1, 2) durch verschieben von selbst gegeneinander verstellbar und dadurch die jeweilige Lagereinrichtung (7, 7') gegenüber den Rohren (1, 2) in vorbestimmten Lagen positionierbar ist.

## Claims

1. Lifting post with at least two tubes of different outside diameters arranged one inside the other, which has a drive which is operatively connected to one of the tubes, whereby one of the tubes can be made to move relatively with respect to another tube along a longitudinal axis, the two tubes being mounted against each other by at least one bearing device arranged between the tubes, the at least one bearing device being arranged on one of the tubes such that it is fixed in place with respect to the moving direction of the tubes and the other tube being movable relatively with respect to the bearing device by sliding displacement, **characterized in that** the bearing device (7, 7') has two bearing elements (6, 19; 6', 19') lying with supporting areas (15, 23; 15', 23') one on top of the other, and a joint width of the bearing elements (6, 19; 6', 19') being variable - with respect to a direction transverse to the longitudinal axis (4), both bearing elements (6, 19; 6', 19') being provided with a supporting area (15, 23; 15', 23') which is inclined with respect to the longitudinal axis (4).

2. Lifting post according to Claim 1, **characterized in that** the two areas are provided with substantially the same angles of inclination (α, β) with respect to base areas (13, 20; 13' , 20' ) of the two bearing elements (6, 19; 6', 19').

3. Lifting post according to Claim 1 or 2, **characterized in that** the two bearing elements (6, 19; 6', 19') are adjustable with respect to each other in the direction of the longitudinal axis (4).

4. Lifting post according to one or more of the preceding claims, **characterized in that** a joint width (B) - with respect to a direction substantially transverse to the longitudinal axis (4) of the lifting post - of the bearing elements (6, 19; 6', 19') is variable by different positions - with respect to a direction substantially parallel to the longitudinal axis (4) - of the bearing elements (6, 19; 6', 19') in relation to each other.

5. Lifting post according to Claim 3 or 4, **characterized in that** the two bearing elements (6, 19; 6', 19') are steplessly adjustable.

6. Lifting post according to one or more of the preceding claims, **characterized in that** the two areas (15, 23; 15', 23') are respectively provided with a step profile.

7. Lifting post according to one or more of the preceding claims, **characterized in that** the two tubes (1, 2) have in cross section in each case a substantially angular cross-sectional profile and bearing devices (7, 7') are respectively arranged in the region of edges of the tubes.

8. Lifting post according to one or more of the preceding claims, **characterized in that** the bearing element (6, 19; 6', 19') which is in contact with the movable tube (1, 2) has a convexly curved frictional area, and **in that** this tube is provided with a sliding area (21) congruent thereto.

9. Lifting post according to one or more of the preceding claims, **characterized in that** one of the two bearing elements (6, 19; 6', 19') is of a multi-part form, preferably a two-part form, one part (19a) of the multi-part bearing element (6, 19; 6', 19') bearing against the other bearing element (6, 19, 6', 19') and the second part (19b) of the multi-part bearing element (6, 19; 6', 19') bearing with surface contact against one of the tubes (1, 2).

10. Lifting post according to Claim 9, **characterized in that** the two parts (19a, 19b) bear against each other with two areas (40', 45') which are substantially congruent at least in certain portions.

11. Lifting post according to one or both of the preceding Claims 9 and 10, **characterized in that** two parts (19a, 19b) of the multi-part bearing element (6, 19; 6', 19') are adjustable in relation to each other in a direction which runs substantially transversely to the direction of movement of one of the tubes.

12. Lifting post according to Claim 10, **characterized in that** the two parts (19a, 19b) are adjustable with respect to each other in dependence on masses of the tubes (1, 2) by displacement of their own accord and, as a result, the respective bearing device (7, 7') is able to be positioned in predetermined positions with respect to the tubes (1, 2) .

## Revendications

1. Élévateur à colonne comprenant au moins deux tubes disposés l'un dans l'autre de diamètres extérieurs différents, lequel présente un entraînement qui est en liaison coopérante avec l'un des tubes, ce par quoi l'un des tubes peut être déplacé relativement par rapport à un autre tube le long d'un axe longitudinal, les deux tubes étant supportés l'un contre l'autre par au moins un dispositif de palier disposé entre les tubes, l'au moins un dispositif de palier étant disposé fixement sur l'un des tubes par rapport à la direction de déplacement des tubes et l'autre tube étant déplaçable relativement par rapport au dispositif de palier par coulissement, **caractérisé en ce que** le dispositif de palier (7, 7') présente deux éléments de palier (6, 19 ; 6', 19') superposés par des faces d'appui (15, 23 ; 15', 23'), et une largeur commune des éléments de palier (6, 19 ; 6', 19') - par rapport à une direction transversalement à l'axe longitudinal (4) - est variable, les deux éléments de palier (6, 19 ; 6', 19') étant pourvus d'une face d'appui (15, 23 ; 15', 23') inclinée par rapport à l'axe longitudinal (4).

2. Élévateur à colonne selon la revendication 1, **caractérisé en ce que** les deux faces par rapport aux faces de base (13, 20 ; 13', 20') des deux éléments de palier (6, 19 ; 6', 19') sont pourvues d'angles d'inclinaison (α, β) essentiellement égaux.

3. Élévateur à colonne selon la revendication 1 ou 2, **caractérisé en ce que** les deux éléments de palier (6, 19 ; 6', 19') sont réglables l'un par rapport à l'autre dans la direction de l'axe longitudinal (4).

4. Élévateur à colonne selon l'une quelconque ou plusieurs des revendications précédentes, **caractérisé en ce qu'**une largeur commune (B) - par rapport à une direction essentiellement transversalement à l'axe longitudinal (4) de la élévateur à colonne - des éléments de palier (6, 19 ; 6', 19') peut être variée par différentes positions - par rapport à une direction essentiellement parallèlement à l'axe longitudinal (4) - des éléments de palier (6, 19 ; 6', 19') les uns par rapport aux autres.

5. Élévateur à colonne selon la revendication 3 ou 4, **caractérisé en ce que** les deux éléments de palier (6, 19 ; 6', 19') sont réglables de façon progressive.

6. Élévateur à colonne selon l'une quelconque ou plusieurs des revendications précédentes, **caractérisé en ce que** les deux faces (15, 23 ; 15', 23') sont respectivement pourvues d'un profil étagé.

7. Élévateur à colonne selon l'une quelconque ou plusieurs des revendications précédentes, **caractérisé en ce que** les deux tubes (1, 2) présentent, en section transversale, à chaque fois un profil en section transversale essentiellement polygonal et des dispositifs de palier (7, 7') sont à chaque fois disposés dans la région des arêtes des tubes.

8. Élévateur à colonne selon l'une quelconque ou plusieurs des revendications précédentes, **caractérisé en ce que** l'élément de palier (6, 19 ; 6', 19') qui est en contact avec le tube mobile (1, 2), présente une surface de frottement bombée et **en ce que** ce tube est pourvu d'une surface de glissement (21) congruente à celle-ci.

9. Élévateur à colonne selon l'une quelconque ou plusieurs des revendications précédentes, **caractérisé en ce que** l'un des deux éléments de palier (6, 19 ; 6', 19') est réalisé en plusieurs parties, de préférence en deux parties, une partie (19a) de l'élément de palier en plusieurs parties (6, 19 ; 6', 19') s'appliquant contre l'autre élément de palier (6, 19 ; 6', 19') et la deuxième partie (19b) de l'élément de palier en plusieurs parties (6, 19 ; 6', 19') s'appliquant à plat contre l'un des tubes (1, 2).

10. Élévateur à colonne selon la revendication 9, **caractérisé en ce que** les deux parties (19a, 19b) s'appliquent l'une contre l'autre avec deux faces essentiellement congruentes (40', 45') au moins par portions.

11. Élévateur à colonne selon l'une quelconque ou plusieurs des revendications précédentes 9 ou 10, **caractérisé en ce que** deux parties (19a, 19b) de l'élément de palier en plusieurs parties (6, 19 ; 6', 19') sont réglables l'une par rapport à l'autre dans une direction qui s'étend essentiellement transversalement à la direction de déplacement de l'un des tubes.

12. Élévateur à colonne selon la revendication 10, **caractérisé en ce que** les deux parties (19a, 19b) sont réglables l'une par rapport à l'autre en fonction de dimensions des tubes (1, 2) par leur propre déplacement et de ce fait le dispositif de palier respectif (7, 7') peut être positionné par rapport aux tubes (1, 2) dans des positions prédéterminées.
